# EUROPEAN PATENT APPLICATION

(11) **EP 4 801 129 A1**
(43) Date of publication of application: **02.09.2026**
(21) Application number: 23956847.0
(22) Date of filing: 27.10.2023
(51) Int. Cl.: H04W 56/00, H04W 72/0457, H04W 72/23

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/038919
(87) International publication number: WO 2025/088796

(57) **Abstract**

A terminal according to one aspect of the present disclosure includes: a receiving section that receives information indicating two Timing Advance Groups (TAGs); and a control section that controls a transmission timing of an uplink (UL) signal, based on a reception timing of a downlink (DL) reference signal and on the information. According to one aspect of the present disclosure, it is possible to appropriately control a timing of UL transmission.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems, it is under study to apply a Downlink single transmission/reception point (DL sTRP)/Uplink multi transmission/reception point (UL mTRP) scenario. In this case, it is under study that two Timing Advances (TAs)/Timing Advance Groups (TAGs) are indicated.

However, control of UL transmission for a case that two TAs/TAGs are indicated remains unclear. This may prevent a UE from controlling a timing of UL transmission appropriately.

Thus, an object of the present disclosure is to provide a terminal, a radio communication method, and a base station that enable appropriate control of a timing of UL transmission. Solution to Problem

A terminal according to one aspect of the present disclosure includes: a receiving section that receives information indicating two Timing Advance Groups (TAGs); and a control section that controls a transmission timing of an uplink (UL) signal, based on a reception timing of a downlink (DL) reference signal and on the information.

### Advantageous Effects of Invention

According to one aspect of the present disclosure, it is possible to appropriately control a timing of UL transmission.

### Brief Description of Drawings

[FIG. 1] FIG. 1A is a diagram to show an example of typical deployment of a transmission/reception point. FIG. 1B is a diagram to show an example of UL dense deployment.
[FIG. 2] FIG. 2 is a diagram to show an example of DL/UL coverage of a Heterogeneous Network (HetNet).
[FIG. 3] FIG. 3 is a diagram to show an example of configuration of a TAG for a cell.
[FIG. 4] FIGS. 4A and 4B are each a diagram to show an example of a MAC CE for timing advance command.
[FIG. 5] FIG. 5A is a diagram to show a first example of coresetPoolIndex value. FIG. 5B is a diagram to show a second example of coresetPoolIndex value.
[FIG. 6] FIG. 6A is a diagram to show an example of a TCI-UL-State information element according to Option 1-1 of a second embodiment. FIG. 6B is a diagram to show an example of a TCI-State information element according to Option 1-1 of the second embodiment.
[FIG. 7] FIG. 7A is a diagram to show an example of a TCI-UL-State information element according to Option 1-3 of the second embodiment. FIG. 7B is a diagram to show an example of a TCI-State information element according to Option 1-3 of the second embodiment.
[FIG. 8] FIG. 8 is an example to show an example of a concept diagram according to Option 3 of the second embodiment.
[FIG. 9] FIG. 9 is a diagram to show an example of a concept diagram according to a third embodiment.
[FIG. 10] FIG. 10 is a diagram to show an example of a schematic structure of a radio communication system according to one embodiment.
[FIG. 11] FIG. 11 is a diagram to show an example of a structure of a base station according to one embodiment.
[FIG. 12] FIG. 12 is a diagram to show an example of a structure of a user terminal according to one embodiment.
[FIG. 13] FIG. 13 is a diagram to show an example of a hardware structure of the base station and the user terminal according to one embodiment.
[FIG. 14] FIG. 14 is a diagram to show an example of a vehicle according to one embodiment.

### Description of Embodiments

### (Scenario 1: UL Dense Deployment (UL-only TRP))

In Rel-15 NR, coverages (reachable distances) of a PUSCH, PUCCH, PRACH, PDSCH, PDCCH, and PBCH are not equal to each other. The PUSCH coverage is restricted, especially at a high frequency. For future radio communication systems (for example, Rel. 18, Rel. 19, or later versions), improvement in at least one of UL coverage and UL throughput is under study.

It is studied that, to enhance UL coverage, a UL reception point is provided in addition to typical transmission/reception points. Thus, an example of typical deployment of a transmission/reception point and an example of deployment provided with a UL reception point (UL dense deployment) will be described.

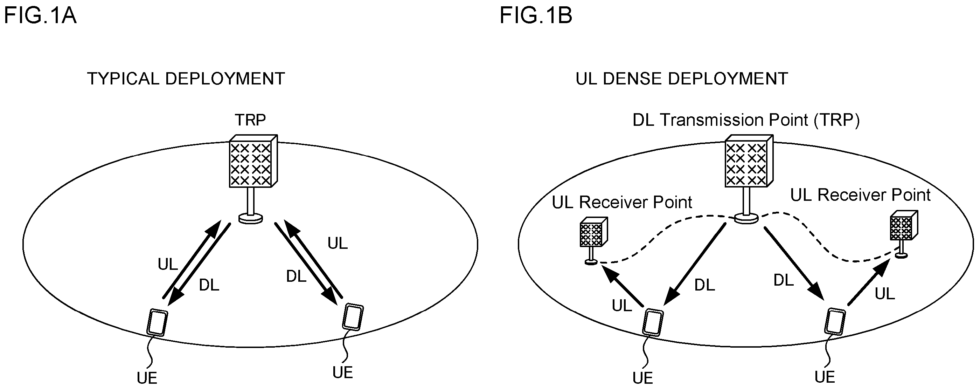

FIG. 1A is a diagram to show an example of typical deployment of a transmission/reception point. In FIG. 1A, UEs receive DL signals from a transmission/reception point (TRP) and transmit UL signals to the TRP. For example, in a case where a UE is far from the TRP, the pathloss may be large, causing the communication quality to be degraded.

FIG. 1B is a diagram to show an example of UL dense deployment. In order to enhance UL coverage, it is under study to provide UL reception points as shown in FIG. 1B, in addition to such a TRP (DL transmission point) as that shown in FIG. 1A. In FIG. 1B, UEs receive DL signals from a DL transmission point (TRP/ central TRP/DL TRP) corresponding to a macro cell and transmit UL signals to UL reception points (for example, reception points with lower pathloss/received power). Note, however, that the UE can also perform UL transmission to the DL transmission point.

Using such UL dense deployment as that shown in FIG. 1B reduces pathloss, improves UL signaling quality, and obtains a higher coding rate, as compared with such typical deployment as that shown in FIG. 1A, thereby enabling both the coverage and UL data rate to be improved. The UL reception points each primarily perform reception, and thus have a reduced number of required functions (such as a power amplifier, for example) and low cost as compared with a transmission/reception point corresponding to a typical small cell, leading to extremely simple deployment management.

### (Scenario 2: Decoupling of DL TRP and UL TRP in HetNet)

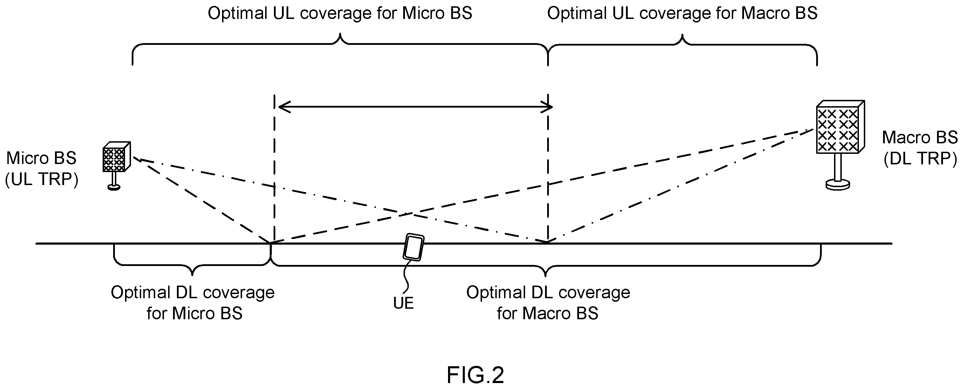

In the present disclosure, a Heterogeneous Network (HetNet) using a macro Base Station (BS) (DL TRP) and a micro BS (UL TRP) may be applied (FIG. 2). In the normal HetNet, transmission power of the macro BS is different from that of the micro BS. The optimal DL coverage and the optimal UL coverage are different. For example, the DL coverage is determined by RSRP, and the UL coverage is determined by pathloss (PL).

In an example of FIG. 2, the UE is included in the optimal DL coverage of the macro BS and the optimal UL coverage of the micro BS. In this case, the UE can receive DL from the macro BS and transmit UL to the micro BS. Note, however, that the UE may transmit some reference signals/channels (for example, an SRS for Antenna switching (AS) usage used to acquire DL CSI) to the macro BS. Accordingly, there is a possibility that the UE requires two TAs in this scenario. Note that the SRS for AS is a signal for a base station (macro BS) to perform DL CSI measurement (for example, determination of a DL MIMO precoder) by using channel reciprocity, based on SRS reception, and thus is transmitted to the macro BS. On the other hand, an SRS for Codebook/Non-codebook usage is used for determination of a precoder/beam for the PUSCH, and thus is transmitted to the micro BS.

In the HetNet, even if the micro BS has a DL transmission capability, the energy of the micro BS can be saved by turning off DL almost all the time. In this case, the function of the micro BS is similar to that of a UL-only TRP (UL reception point).

### (Timing Advance)

Timing advance (TA) is used for UL timing adjustment. In an existing specification (Rel. 17), UL frame number i for transmission from a UE is started specific time (for example, T_{TA}) before a start of a corresponding DL frame.

The specific time may be, for example, T_{TA} = (N_{TA} + N_{TA,offset} + N^{common}_{TA,adj} + N^{UE}_{TA,adj})T_{c}. Nc^{ommonT}_{A,adj} and N^{UE}_{TA,adj} may be 0 when being used in an NTN (non-terrestrial network), irrespective of the examples of the present disclosure.

Here, N_{TA}, N_{TA,offset}, N^{common}_{TA,adj}, N^{UE}_{TA,adj}, and T_{C} may represent a timing advance between DL and UL, a fixed offset used for computation of a timing advance, a network-controlled timing correction, a UE-derived timing correction, and a basic time unit for NR, respectively.

For example, in random access preamble transmission and message A PUSCH transmission, N_{TA} is 0 and N_{TA,offset} is applied.

### (Timing Advance Group)

When a plurality of TRPs are used, the distance between a UE and each TRP is different for some cases. The plurality of TRPs may be included in the same cell (for example, a serving cell). Alternatively, among the plurality of TRPs, a certain TRP may correspond to the serving cell, and the other TRP(s) may correspond to a non-serving cell(s). The plurality of TRPs may include a DL transmission point and a UL reception point. In this case, it is also assumed that the distance between each TRP and the UE is different.

In existing systems, a transmission timing of a UL (Uplink) channel and/or a UL signal (UL channel/signal) is adjusted by timing advance (TA). A reception timing of a UL channel/signal from a different user terminal (UE) is adjusted on the radio base station (also referred to as a TRP (Transmission and Reception Point), gNB (gNodeB), and the like)) side.

A UE may apply timing advance for each preconfigured timing advance group (TAG) (multiple timing advances) to perform timing control for UL transmission.

When the multiple timing advances is applied, timing advance groups (TAGs) classified according to transmission timing are supported. The UE may control UL transmission timing in each TAG by assuming that the same TA offset (or TA value) is applied for each TAG. In other words, the TA offset may be configured independently for each TAG.

When the multiple timing advances are applied, the UE independently adjusts transmission timing for the cells belonging to each TAG, thereby enabling a timing of uplink signal reception from the UE to be matched at a radio base station even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (for example, MCG/SCG).

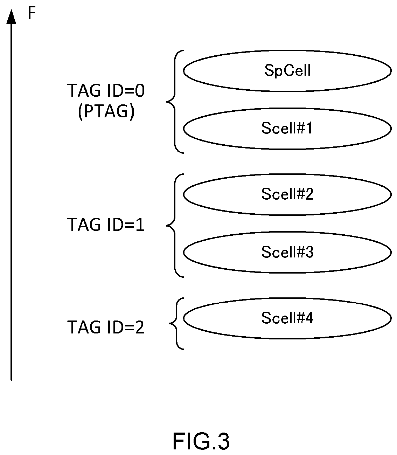

In existing systems (for example, Rel-16 NR), configuration of up to four TAGs is supported for each cell group (for example, MCG/SCG) (see FIG. 3). FIG. 3 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command (TAC) is signaled from a radio base station to the UE on a MAC layer. The UE controls a certain timer (for example, a TA timer), based on reception of the TA command.

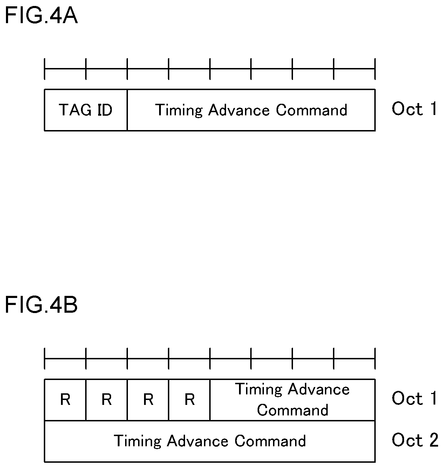

A MAC CE for timing advance command may have a structure including a field for timing advance group index (for example, TAG ID) and a field for timing advance command (see FIG. 4A). The MAC CE may be formed by 1 octet (= 8 bits).

The field for TAG ID (TAG ID field) may be formed, for example, by 2 bits. The TAG ID field may be used to indicate the TAG ID of an addressed TAG. The field for timing advance command (TAC field) may be formed, for example, by 6 bits. The TAC field may indicate an index value T_{A} (0, 1, 2, ..., 63) to be used for control of the amount/value (relative amount/value) of timing adjustment to be applied by the MAC entity. The MAC CE for timing advance command shown in FIG. 4A may be referred to as a TAC MAC CE.

FIG. 4B is a diagram to show another example of the MAC CE for timing advance command. The MAC CE shown in FIG. 4B may be referred to as an absolute TAC MAC CE. The MAC CE may be formed by 2 octet (= 16 bits). Specifically, the MAC CE may include a field for reserve bit (R bit field) and a field for timing advance command (TAC field). The R bit field (R = 0) may be formed, for example, by 4 bits. The TAC field may be formed over 2 octets, for example, by 12 octets. The TAC field of FIG. 4B may indicate an index value to be used for control of the amount/value (absolute amount/value) of actual TA to be applied by the MAC entity, in a manner similar to that of FIG. 4A. The absolute TAC MAC CE may not include the TAG ID field shown in FIG. 4A.

The MAC CE shown in FIG. 4A may be used after initial access is established. In contrast, the MAC CE shown in FIG. 4B may be used only in initial access, and may be included in an RAR or the like. The respective fields included in the MAC CE for timing advance command described above may be referred to as TA-related fields. Among them, the TAC field shown in FIG. 4A may be referred to as a TA adjustment field/field for indication of TA adjustment/field related to TA adjustment. The TAC field shown in FIG. 4B may be referred to as an absolute TAC field/field for indication of an absolute TAC.

A parameter corresponding to each TAG ID may be configured by a higher layer parameter. For example, a parameter such as a time alignment timer (for example, timeAlignmentTimer) corresponding to each TAG ID may be configured. Alternatively, a TAG ID may be configured for each serving cell by a higher layer parameter (for example, tag-ID included in ServingCellConfig). Note that the TAG ID/parameter may be updated by a MAC CE after being configured by the higher layer parameter.

The time alignment timer may be maintained for UL time alignment. In Rel. 17, the time alignment timer may be configured/associated for each TAG. When the UE has received a MAC CE for timing advance command (for example, a TAC MAC CE), the UE starts or restarts a time alignment timer associated with each indicated timing advance group (for example, TAG).

When a MAC entity receives the TAC MAC CE, and a certain value (N_{TA}) is maintained for the indicated TAG, the MAC entity applies the timing advance command for the indicated TAG or starts or restarts the time alignment timer associated with the indicated TAG. The certain value (N_{TA}) may be timing advance between DL and UL.

Operations when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, Rel. 17 supports a case that certain operation for PTAG is applied when a timing advance timer corresponding to a PTAG expires, and certain operation for STAG is applied when a timing advance timer corresponding to an STAG expires.

For example, when such a time alignment timer expires, the following operation (for example, the certain operation for PTAG/certain operation for STAG) may be performed.

### {Certain Operation for PTAG}

In a case where a time alignment timer is associated with a PTAG,
- flash all the HARQ buffers of all the serving cells
- notify RRC to release a PUCCH, if configured, for all the serving cells
- notify RRC to release an SRS, if configured
- clear all configured DL assignments and configured UL assignments
- clear a PUSCH resource for semi-persistent CSI report
- cause all running time alignment timers to expire
- maintain N_{TA} of all TAGs

### {Certain Operation for STAG}

In a case where a time alignment timer is associated with an STAG, for all the serving cells belonging to the TAG,
- flash all the HARQ buffers
- notify RRC to release a PUCCH, if configured
- notify RRC to release an SRS, if configured
- clear all configured DL assignments and UL assignments
- clear a PUSCH resource for semi-persistent CSI report
- maintain N_{TA} of the TAG

### (Analysis)

For future radio communication systems, it is under study to apply a DL sTRP/UL mTRP scenario. In this case, it is under study that two TAs/TAGs are indicated.

However, control of UL transmission for a case that two TAs/TAGs are indicated remains unclear. This may prevent a UE from controlling a timing of UL transmission appropriately.

Thus, the inventors of the present invention came up with the idea of a method for enabling appropriate control of a timing of UL transmission.

### (Various Interpretations, etc.)

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a base station, a gNB, a network (NW), an RS group, an antenna port group, and a control resource set (CORESET) group may be interchangeably interpreted. In the present disclosure, a terminal, a user terminal, and a User Equipment (UE) may be interchangeably interpreted.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource set, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

In the present disclosure, sTRP, a single TRP, a channel/signal using a single TRP, one SRS resource set being indicated by DCI, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, mTRP, multi-TRP, two SRS resource sets being indicated by DCI, a channel/signal using multi-TRP, a channel using a plurality of TCI states/spatial relations, multi-TRP being enabled by RRC/DCI, a plurality of TCI states/spatial relations being enabled by RRC/DCI, and at least one of multi-TRP based on single DCI and multi-TRP based on multi-DCI may be interchangeably interpreted.

In the present disclosure, single DCI, sDCI, a single PDCCH, multi-TRP based on single DCI, sDCI-based mTRP, two TCI states in at least one TCI codepoint being activated, at least one codepoint of a TCI field being mapped to two TCI states, and a specific index (for example, a TRP index, a CORESET pool index, or an index corresponding to a TRP) being configured for a specific channel/CORESET may be interchangeably interpreted.

In the present disclosure, multi-DCI, mDCI, multi-PDCCH, multi-TRP based on multi-DCI, mDCI-based mTRP, two CORESET pool indices or CORESET pool index = 1 (or a value of 1 or greater) being configured, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index = 0, or may correspond to a first TCI state of two TCI states corresponding to one codepoint of a TCI field. TRP #2 (second TRP) TRP #1 (first TRP) may correspond to CORESET pool index = 1, or may correspond to a second TCI state of the two TCI states corresponding to one codepoint of the TCI field. The first TRP or the second TRP may be a DL transmission point or a UL reception point.

A UL reception point may be connected to a TRP (for example, a base station or the like) or a core network via a wired connection or a wireless connection. The UL reception point may be treated as a network (NW) or a base station. The UL reception point may be capable of transmitting a downlink (DL) signal, and may be applied to a base station forming a macro cell. For example, the UL reception point may not transmit downlink data, and may transmit a control signal/channel.

In the present disclosure, UL dense deployment, a distributed TRP mode, a separated location mode of a transmission/reception point, a distributed transmission/reception mode, a separated TRP mode, TRP type 1, TRP type 2, TRP type A, and TRP type B may be interchangeably interpreted.

In the present disclosure, an SRS may be at least one of an aperiodic (A)-SRS, a periodic (P)-SRS, and a semi-persistent (SP)-SRS.

In the present disclosure, a path loss reference RS, a path loss reference RS for PUSCH, a path loss reference RS for PUCCH, a path loss reference RS for SRS, an SSB, a CSI-RS, and an RS may be interchangeably interpreted. In the present disclosure, a path loss (PL), a path loss value, and a path loss parameter may be interchangeably interpreted.

In the present disclosure, a base station, a UL reception point, a UL TRP, a UL-only TRP, and a micro BS may be interchangeably interpreted. The UL reception point may perform only UL reception, or may perform DL transmission when a condition is satisfied.

In the present disclosure, a base station, a DL transmission point, a DL TRP, a DL-only TRP, a macro BS, and a central TRP may be interchangeably interpreted. The DL transmission point may perform only DL transmission, or may perform UL reception when a condition is satisfied.

In the present disclosure, a TA, a TAG, and a TA offset value may be interchangeably interpreted. DL reference timing and DL reception timing may be interchangeably interpreted. Two TAs/TAGs may be interpreted as more than two TAs/TAGs.

In the present disclosure, coresetPoolIndex, a CORESET pool index, and an RRC parameter indicating a CORESET pool index may be interchangeably interpreted. n-TimingAdvanceOffset and a TA offset may be interchangeably interpreted. TCI-UL-State, a UL TCI state, and an RRC parameter indicating a UL TCI state may be interchangeably interpreted. dl-OrJointTCI-StateList, a list of DL or joint TCI states, and an RRC parameter indicating a list of DL or joint TCI states may be interchangeably interpreted. ul-TCI-StateList, a list of UL TCI states, and an RRC parameter indicating a list of UL TCI states may be interchangeably interpreted. n-TimingAdvanceOffset and n-TimingAdvanceOffset2 may each be interpreted as a TA offset or an RRC parameter indicating a TA offset.

DL sTRP/UL mTRP may mean a scenario applied in Rel. 19, for example. DL sTRP/UL mTRP may be, for example, Scenario 1 (FIG. 1B) or Scenario 2 (FIG. 2) described above. Asymmetrical DL sTRP/UL mTRP and DL sTRP/UL mTRP may be interchangeably interpreted.

### (Radio Communication Method)

### <Definition Regarding Two TAs in Rel. 18>

In Rel. 18, transmission timing adjustment is described as below.

With respect to a serving cell, in a case where, for a UE, two coresetPoolIndex values = 0 and 1 are provided for a first CORESET and a second CORESET or where a coresetPoolIndex value = 1 is provided for the second CORESET with no coresetPoolIndex value provided for the first CORESET, a first N_{TA,offset} value and a second N_{TA,offset} value may be provided by n-TimingAdvanceOffset and n-TimingAdvanceOffset2, for transmission using the respective TCI states associated with the first CORESET and second CORESET.

In Rel. 18, a UE procedure for transmission of a physical uplink shared channel is described as below.

In a case where, for a UE, a higher layer parameter PDCCH-Config including ControlResourceSets having coresetPoolIndex of two different values is configured for an active BWP of a serving cell or where the UE is configured with SSB-MTC-AddtionalPCI and PDCCH-Config including coresetPoolIndex of two different values is configured for ControlResourceSet, when the UE is configured with two tags and dl-OrJointTCI-StateList or TCI-UL-State is configured for the serving cell, each TCI-State or TCI-UL-State is associated with a TAG-ID for determination of timing adjustment of corresponding UL transmission.

As described above, in Rel. 18, CoresetPoolIndex is used as a condition for mDCI-based two TAs to be configured. However, taking account of asymmetrical DL sTRP/UL mTRP, the enhancement for a UL reception point (UL TRP) and a DL transmission point (DL single TRP) without using CoresetPoolIndex is preferable.

### <Scenario Other Than mDCI mTRP>

Although it is studied that two TAs are applied for multi-DCI (mDCI) multi-TRP (mTRP) of Rel. 18, two TAs may be applied for a scenario other than mDCI mTRP. For example, the following examples may be applied.
- Different TAs can be used for a UL reception point and a DL transmission point.
- Different TAs can be used for different UL reception points.
- The first embodiment is not limited to UL dense deployment. In a single-DCI (sDCI) multi-TRP (mTRP) scenario, different TAs can be used for a plurality of TRPs.

That is to say, when one or more UL reception points for which different timing advances (TAs) are used and a DL transmission point are applied, the UE may receive a configuration related to the TAs and determine, based on the configuration, a timing of uplink (UL) transmission to the UL reception point(s).

In other words, enhancements (TA enhancements) in (1) and (2) below are also applicable to a UE not configured with mDCI and mTRP. Note that a UE configured with mDCI and mTRP means a "UE provided with no coresetPoolIndex or with coresetPoolIndex having a value of 0 for first CORESETs on active DL BWPs of a serving cell and provided with coresetPoolIndex having a value of 1 for second CORESETs on active DL BWPs of the serving cell."
(1) The UE may support configuration of two (or more than two) TA offsets (n-TimingAdvanceOffset values) per serving cell. The offset values may each be used as N_{TA,offset}. Each offset value may be associated with a TAG, a CORESET, a TCI state, and a cell (physical cell ID (PCI)).
(2) A TAG ID and a TCI state may be associated with each other. In a case of UL transmission, a TAG ID associated with a UL/joint TCI state may be used.

In a case where a UL reception point is applied, at least one of the TA enhancements described above ((1) and (2)) may be applied in a case of being enabled with a specific RRC parameter. Alternatively, the specific RRC parameter may not be enabled, and the UE may directly receive, from a NW, configurations of two (or more than two) TAGs, two (or more than two) TA offset values (nTAoffset), an association between TCI and a TAG, and the like.

### <First Embodiment>

A UE may receive, in a case where a specific condition is satisfied, pieces of information including information indicating two TA offset values (first and second TA offset values) and information related to a TCI state (TCI-State or TCI-UL-State) associated with a TAG-ID for determination of timing adjustment of corresponding UL transmission, and control UL transmission, based on the pieces of information received.

For example, transmission timing adjustment and a UE procedure for transmission of a physical uplink shared channel may be defined as (1) and (2) below. Note that, in (1) and (2), at least one condition except a specific condition may be omitted.
(1) With respect to a serving cell, in a case where, for a UE, two coresetPoolIndex values = 0 and 1 are provided for a first CORESET and a second CORESET, or where a coresetPoolIndex value = 1 is provided for the second CORESET with no coresetPoolIndex value provided for the first CORESET, or where a specific condition is satisfied, a first N_{TA,offset} value and a second N_{TA,offset} value may be provided by n-TimingAdvanceOffset and n-TimingAdvanceOffset2, for transmission using the respective TCI states associated with the first CORESET and second CORESET.
(2) In a case where, for a UE, a higher layer parameter PDCCH-Config including ControlResourceSets having coresetPoolIndex of two different values is configured for an active BWP of a serving cell, or where the UE is configured with SSB-MTC-AddtionalPCI and PDCCH-Config including coresetPoolIndex of two different values is configured for ControlResourceSet, or where a specific condition is satisfied, when the UE is configured with two tags and dl-OrJointTCI-StateList or TCI-UL-State is configured for the serving cell, each TCI-State or TCI-UL-State is associated with a TAG-ID for determination of timing adjustment of corresponding UL transmission.

Regarding examples of the specific condition in (1) and (2) described above, any of options below may be applied. The specific condition in (1) may be the same as/different from the specific condition in (2). As the specific condition, at least one of specific conditions in options below may be applied in combination by using an AND condition or an OR condition.

### {Option 1}

In a case where the UE indicates a capability to support two TAs for an asymmetrical DL sTRP/UL mTRP scenario, the UE may be provided with the first and second TA offset (N_{TA,offset}) values and each TCI-State or TCI-UL-State may be associated with a TAG-ID for determination of timing adjustment of corresponding UL transmission.

In other words, the specific condition may be that the UE transmits UE capability information indicating supporting of two TAs for an asymmetrical DL sTRP/UL mTRP scenario.

### {Option 2}

In a case where the UE is provided with a higher layer parameter for pathloss offset configuration for pathloss calculation for a UL TRP and receives a pathloss RS from a DL sTRP, the UE may be provided with the first and second N_{TA,offset} values and each TCI-State or TCI-UL-State may be associated with a TAG-ID for determination of timing adjustment of corresponding UL transmission.

In other words, the specific condition may be that the UE is provided with (the UE receives) the higher layer parameter for pathloss offset configuration for pathloss calculation for a UL TRP and receives a pathloss RS from a DL sTRP. The specific condition may be that the UE is provided with (the UE receives) the higher layer parameter indicating pathloss offset configuration for an asymmetrical DL sTRP/UL mTRP scenario.

### {Option 3}

In a case where at least one TCI codepoint indicated to the UE indicates two TCI states, the UE may be provided with the first and second N_{TA,offset} values and each TCI-State or TCI-UL-State may be associated with a TAG-ID for determination of timing adjustment of corresponding UL transmission.

In other words, the specific condition may be that at least one TCI codepoint indicated to the UE indicates two TCI states. Such a TCI codepoint may be indicated to the UE by DCI.

### {Option 4}

In a case where the UE is configured with dl-OrJointTCI-StateList or ul-TCI-StateList and has two TCI states indicated, the UE may be provided with the first and second N_{TA,offset} values and each TCI-State or TCI-UL-State may be associated with a TAG-ID for determination of timing adjustment of corresponding UL transmission.

In other words, the specific condition may be that the UE is configured (by higher layer signaling) with dl-OrJointTCI-StateList or ul-TCI-StateList and dl-OrJointTCI-StateList or ul-TCI-StateList has two TCI states indicated.

### {Option 5}

In a case where the UE is configured (by higher layer signaling) with dl-OrJointTCI-StateList or ul-TCI-StateList, the UE may be provided with the first and second N_{TA,offset} values and each TCI-State or TCI-UL-State may be associated with a TAG-ID for determination of timing adjustment of corresponding UL transmission.

In other words, the specific condition may be that the UE is configured (by higher layer signaling) with dl-OrJointTCI-StateList or ul-TCI-StateList.

Options 3 and 4 may be limited to a case of sDCI mTRP.

### {Other}

For the UE, in a case where at least one of the specific conditions in Options 1 to 5 of the present embodiment is satisfied, at least one of the following may be performed.
(1) The UE may be configured with two TAGs for one serving cell.
(2) Two DL timings may be associated with two TAGs.
(3) The UE may be indicated with a TAG ID in an absolute timing advance MAC CE.
(4) The UE is indicated with a TAG ID in a MAC RAR.

In a case where the UE transmits specific UE capability information or receives a specific configuration by higher layer signaling, the UE may be provided with two TA offsets (at least one of the specific conditions described above may be applied) without applying a configuration condition of coresetPoolIndex. In a case where the UE transmits no specific UE capability information or receives no specific configuration by higher layer signaling, a Rel-18 operation (two TA offsets are provided with applying a configuration condition of coresetPoolIndex) may be applied (the specific condition described above may not be applied).

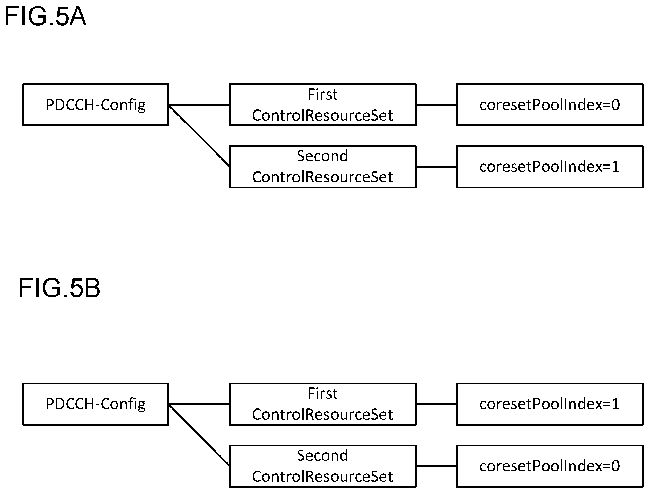

"Two coresetPoolIndex values = 0 and 1 are provided for a first CORESET and a second CORESET" in (1), "a higher layer parameter PDCCH-Config including ControlResourceSets having coresetPoolIndex of two different values is configured," and "PDCCH-Config including coresetPoolIndex of two different values is configured for ControlResourceSet" in (2) described above may each mean, for example, either one of two examples below.
(1) The UE is provided with coresetPoolIndex value = 0 for the first CORESET (First ControlResourceSet) and provided with coresetPoolIndex value = 1 for the second CORESET (Second ControlResourceSet) (FIG. 5A).
(2) The UE is provided with coresetPoolIndex value = 1 for the first CORESET (First ControlResourceSet) and provided with coresetPoolIndex value = 0 for the second CORESET (Second ControlResourceSet) (FIG. 5B).

According to the first embodiment, one condition (specific condition) of conditions for the first and second TA offset (N_{TA,offset}) values to be provided and one condition (specific condition) of conditions for each TCI-State or TCI-UL-State to be associated with a TAG-ID for determination of timing adjustment of corresponding UL transmission do not use ControlResourceSet, allowing appropriate configuration to be made for the UE even in a case of taking account of asymmetrical DL sTRP/UL mTRP. This enables the UE to appropriately control UL transmission.

### <Rel-18 mDCI-based Two TAs>

Regarding Rel-18 mDCI-based two TAs, for a TA for UL transmission, it is under study to determine a DL frame on the basis of a reference signal associated with a UL/joint TCI state:
For example, in a multi-DCI-based multi-TRP operation with two TAs, for every TAG, an uplink transmission timing may be performed (N_{TA} + N_{TA,offset}) × T_{C} before reception in a path detected firstly (in time) in a corresponding downlink frame of a reference signal associated with a UL/joint TCI state.

In order to support enhancement of Rel-18 mDCI-based two TAs for UL TRP and DL sTRP, it is preferable to take account of a possibility that a DL reference signal associated with a UL/joint TCI state of UL transmission for the UL TRP is absent.

### <UL Transmission Timing Adjustment Using DL Reference Timing>

To adjust a timing of UL transmission to a UL reception point, UL frame number i (UL transmission timing) for transmission from a UE is started specific time (TA) before a start of a corresponding downlink frame of the UE (DL reference timing).

The UE may determine a DL reference timing used for the UL transmission to the UL reception point, based on a time of DL reception from a DL transmission point. The DL reception from the DL transmission point may be used as the DL reference timing for two (or more than two) TAGs (for both of the DL transmission point and the UL reception point) of a serving cell.

When the serving cell includes only two TAGs, the UE uses one TAG for the UL reception point and one TAG for the DL transmission point. The DL reference timing for the UL reception point (TAG for the UL reception point) follows a DL reference timing for the DL transmission point (TAG for the DL transmission point).

A base station (gNB) may configure one TAG for the UL reception point, and may configure another TAG for the DL transmission point. One TAG may be associated with the UL reception point (a TCI state for the UL reception point), and another TAG may be associated with the DL transmission point (a TCI state for the DL reception point). The base station may configure the DL reference timings for the two TAGs as the same timing. For example, when one of two TAGs is associated with the UL reception point, the UE may assume that DL reference timings corresponding to the two TAGs are the same. In other words, one DL reference timing may be associated with two TAGs.

When a plurality of DL transmission points with different DL reference timings (a plurality of TAGs for a plurality of DL transmission points) are present in the serving cell, at least one of options 1 and 2 below may be applied.
Option 1: A specification may define which DL reference timing for which DL transmission point (TAG for which DL transmission point) is to be used as a DL reference timing for a UL reception point (TAG for a UL reception point). For example, the UE may use, for the UL reception point, a DL reference timing for a DL transmission point with a lower (lowest) ID, or a DL reference timing corresponding to a TAG with a lower (lowest) ID.
Option 2: Higher layer signaling/physical layer signaling may configure/indicate, to the UE, which DL reference timing for which DL transmission point (TAG for which DL transmission point) is to be used as a DL reference timing for a UL reception point (TAG for a UL reception point). The UE may determine, based on the configuration/indication, the DL reference timing used for transmission to the UL reception point.

Variation: The UE may determine which DL reference timing for which DL transmission point (TAG for which DL transmission point) is to be used as a DL reference timing for a UL reception point (TAG for a UL reception point), based on a measured value of an RS (for example, RSRP or SINR) from the DL transmission point.

Note that the DL reference timing may be determined for each TAG. This may be applied to a case where a DL transmission point corresponding to a TAG among TAGs is absent. When a DL transmission point corresponding to a TAG among the TAGs is present, a timing of DL reception from the DL transmission point may be used as the DL reference timing.

Using such a timing of DL reception from a DL transmission point as a DL reference timing allows the UE to appropriately determine a TA even in a case where a DL transmission point and a UL reception point are applied.

### <Second Embodiment>

In a DL sTRP/UL mTRP scenario (for example, to be applied to Rel. 19), in a case where a UE is provided with two TAGs (receives information indicating the two TAGs), the UE controls a transmission timing of a UL signal on the basis of the information indicating the two TAGs (respective TAGs). The information indicating the two TAGs may be transmitted using a MAC CE, for example. In the present disclosure, a reference signal and a DL reference signal may be interchangeably interpreted. For a method of determining a transmission timing of a UL signal, for example, any of options below may be applied.

### {Option 1}

The UE may control the transmission timing of the UL signal, based on a reception timing of a reference signal (DL reference signal) associated with a UL/joint TCI state and on the information indicating the TAGs.

Similarly to Rel-18 mDCI-based two TAs, an uplink transmission timing may be performed (N_{TA} + N_{TA,offset}) × T_{C} before reception in a path detected firstly (in time) in a corresponding downlink frame of the reference signal associated with the UL/joint TCI state. In this case, an association between a DL reference signal and a UL/joint TCI state is provided, with respect to each UL/joint TCI state.

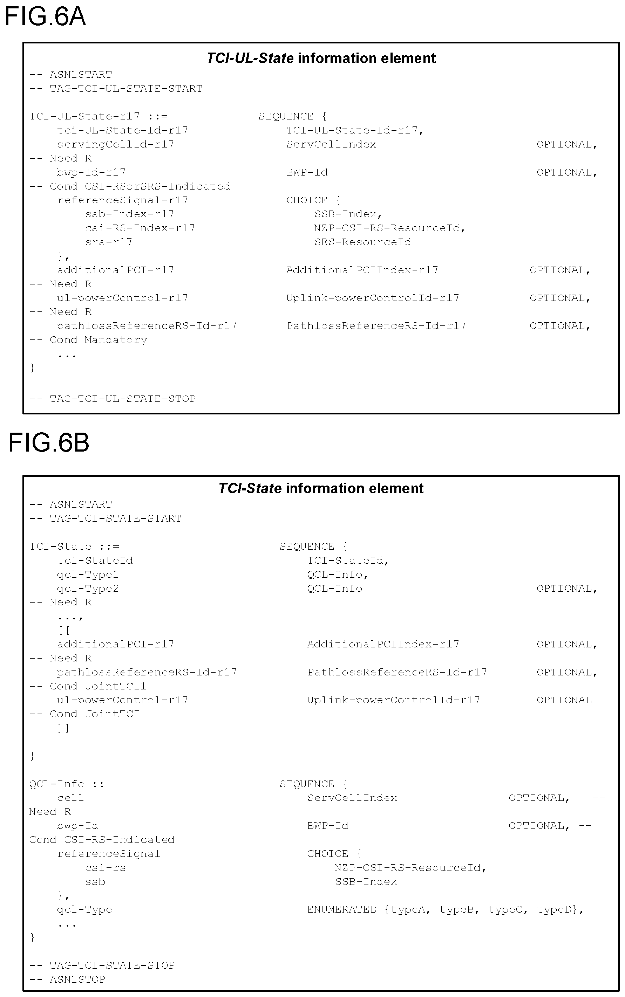

Option 1-1: The reference signal in Option 1 may be indicated to the UE by using a higher layer (RRC) parameter "referenceSignal-r17" or "referenceSignal" indicating a reference signal, in a TCI-UL-State information element (FIG. 6A) or a TCI-State information element (FIG. 6B). However, different from Rel. 18, this reference signal (DL reference signal) may not be used for determination of a UL spatial domain filter for UL transmission, and on the other hand, the DL reference signal may be used only for determination of a DL frame timing for a timing advance for UL transmission. Option 1-1 may be applied only to FR1. A reason for this is that, in FR1, a spatial relation is configurable even if an SSB/CSI-RS is configured as a reference RS.

Option 1-2: The reference signal in Option 1 may be indicated to the UE by using a higher layer (RRC) parameter "pathlossReferenceRS-Id" ("pathlossReferenceRS-Id-r17") indicating a pathloss reference RS, in the TCI-UL-State information element (FIG. 6A) or the TCI-State information element (FIG. 6B).

Option 1-3: The reference signal may be indicated by using a new higher layer parameter "DL-timing-reference-signal" related to a DL timing, in the TCI-UL-State information element or the TCI-State information element. Option 1-3 may be applied to both FR1 and FR2.

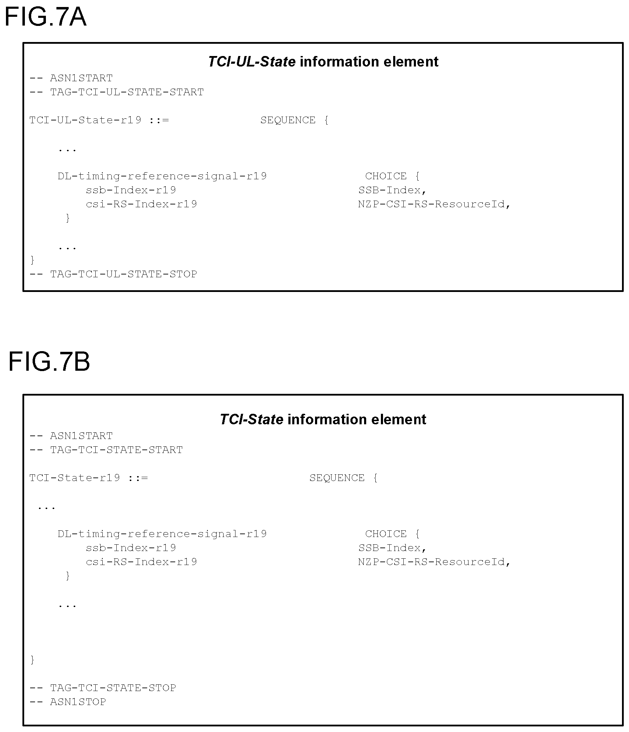

FIG. 7A is a diagram to show an example of the TCI-UL-State information element according to Option 1-3 of the second embodiment. Such a higher layer parameter in Option 1-3 may be, as shown in FIG. 7A, a parameter (DL-timing-reference-signal-r19) different from "referenceSignal-r17" nor "pathlossReferenceRS-Id-r17" in the TCI-UL-State information element. FIG. 7B is a diagram to show an example of the TCI-State information element according to Option 1-3 of the second embodiment. The higher layer parameter in Option 1-3 may be, as shown in FIG. 7B, a parameter (DL-timing-reference-signal-r19) different from "referenceSignal" nor "pathlossReferenceRS-Id-r17" in the TCI-State information element. The parameter name is not limited to the example (DL-timing-reference-signal-r19) in FIGS. 7A and 7B. Although "-r19" refers to Rel. 19, this may refer to another release number.

### {Option 2}

The UE may control the transmission timing of the UL signal, based on a reception timing of a reference signal (DL reference signal) provided by a specific higher layer parameter and on the information indicating the TAGs.

In a case where a UL/joint TCI state of uplink transmission is not associated with the DL reference signal, the uplink transmission timing may be (N_{TA} + N_{TA,offset}) × T_{C} before reception in a path detected firstly (in time) in a corresponding downlink frame of the reference signal provided by the specific higher layer parameter. The specific higher layer parameter may be provided to the UE par BWP/per serving cell/per TAG.

The specific higher layer parameter may be included in an RRC information element other than the TCI-UL-State information element nor TCI-State information element. The specific higher layer parameter may be included in at least one of a PUCCH-SpatialRelationInfo information element, a PUSCH-Config information element, and an SRS-Config information element, for example.

### {Option 3}

The UE may control, in a case where two UL/joint TCI states are indicated and where one UL/joint TCI state out of the two UL/joint TCI states indicated is associated with a DL reference signal, the transmission timing of the UL signal, based on a reception timing of the DL reference signal and on the information indicating the TAGs. The two UL/joint TCI states may correspond to the respective separate UL reception points (UL TRPs).

Regarding uplink transmission, in a case where two UL/joint TCI states #x and #y are indicated to the UE and where the UL/joint TCI state #x of uplink transmission is associated with no DL reference signal and the UL/joint TCI state #y is associated with a DL reference signal, the uplink transmission timing may be (N_{TA} + N_{TA,offset}) × T_{C} before reception in a path detected firstly (in time) in a corresponding downlink frame of the reference signal associated with the joint TCI state #y.

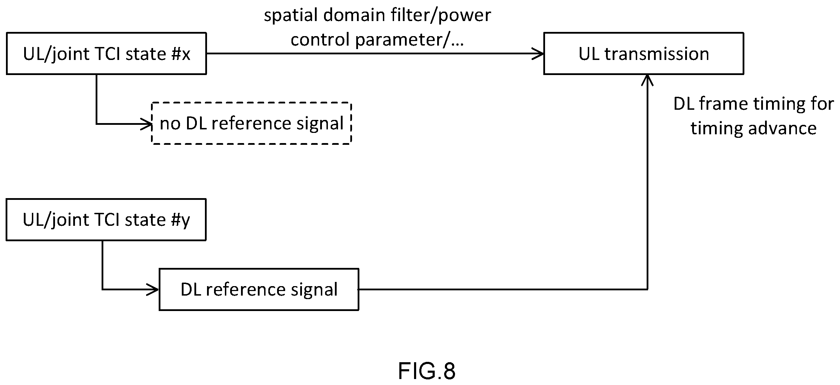

FIG. 8 is an example to show an example of a concept diagram according to Option 3 of the second embodiment. The UL/joint TCI state #x of the uplink transmission is associated with no DL reference signal, and the UL/joint TCI state #x indicates a spatial domain filter of the uplink transmission, a power control parameter, and the like. The UL/joint TCI state #y of the uplink transmission is associated with a DL reference signal, and the uplink transmission timing is determined based on a downlink frame for a TA of the DL reference signal.

### {Option 4}

Regarding uplink transmission, in a case where a UL/joint TCI state of the uplink transmission is associated with no DL reference signal and a UL/joint TCI state associated with a DL reference signal is present in dl-OrJointTCI-StateList or ul-TCI-STateList, the uplink transmission timing may be (N_{TA} + N_{TA,offset}) × T_{C} before reception in a path detected firstly (in time) in a corresponding downlink frame of the reference signal associated with the UL/joint TCI state.

### {Option 5}

Regarding uplink transmission, in a case where a UL/joint TCI state of the uplink transmission is associated with no DL reference signal and UL/joint TCI state(s) associated with a DL reference signal is present in dl-OrJointTCI-StateList or ul-TCI-STateList, the uplink transmission timing may be (N_{TA} + N_{TA,offset}) × T_{C} before reception in a path detected firstly (in time) in a corresponding downlink frame of a reference signal associated with a UL/joint TCI state having a TCI state ID the smallest (or greatest) out of the UL/joint TCI state(s).

### {Option 6}

Regarding uplink transmission, in a case where a UL/joint TCI state of the uplink transmission is associated with no DL reference signal, the uplink transmission timing may be (N_{TA} + N_{TA,offset}) × T_{C} before reception in a path detected firstly (in time) in a corresponding downlink frame of a reference signal or a DL channel of a BWP or a serving cell.

A DL reference signal in the present embodiment may be, for example, an RS of QCL type D.

The present embodiment allows the UE to appropriately determine an uplink transmission timing in either case where a UL/joint TCI state of uplink transmission is associated with a DL reference signal or associated with no DL reference signal.

### <Transmission Timing Adjustment in Rel. 18>

For Rel. 18, regarding transmission timing adjustment, a definition as below is under study:
In a case where a UE operates using two TAGs in an active UL BWP of a serving cell, the UE expects, unless the UE indicates specific UE capability information (larger-thanCP-capability), a difference between a first downlink timing associated with a first TAG and a second downlink timing associated with a second TAG is not larger than a cyclic prefix (CP) length for the active UL BWP.

However, in a case where a timing of transmission to a UL reception point follows a downlink timing of a DL TRP, a so-called "second downlink timing" as in Rel. 18 is not present in a Rel-19 DL sTRP/UL mTRP case. Therefore, the operation described above may be applied to Rel-18 mDCI-based two TAs but may be not applied to a DL sTRP/UL mTRP scenario in Rel. 19.

### <Third Embodiment>

The transmission timing adjustment using two TAGs, studied for Rel. 18, as described above may be applied to Rel-18 mDCI-based two TAs and may not be applied to two TAs of a DL sTRP/UL mTRP scenario (for example, to be applied in Rel. 19).

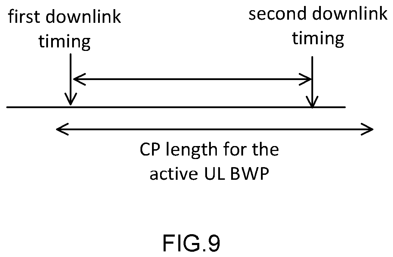

In a case where a UE receives information indicating two TAGs and a specific condition is satisfied, the UE may expect (assume) that a difference between a first downlink timing associated with a first TAG and a second downlink timing associated with a second TAG is not larger than a cyclic prefix (CP) length for an active Uplink Bandwidth part (UL BWP) (FIG. 9).

For example, in a case where the UE operates using the two TAGs in the active UL BWP of a serving cell and the specific condition is satisfied, the UE may expect, unless the UE indicates (transmits) specific UE capability information (larger-thanCP-capability), the difference between the first downlink timing associated with the first TAG and the second downlink timing associated with the second TAG is not larger than the cyclic prefix (CP) length for the active UL BWP.

For example, as the specific condition, any of options below may be applied.

### {Option 1}

The specific condition may be that, for the UE, two coresetPoolIndex values = 0 and 1 are provided for a first CORESET and a second CORESET (for example, coresetPoolIndex value = 0 is provided for the first CORESET and coresetPoolIndex value = 1 is provided for the second CORESET) or coresetPoolIndex value = 1 is provided for the second CORESET with no coresetPoolIndex value provided for the first CORESET.

### {Option 2}

The specific condition may be that the UE is provided with no specific higher layer parameter (higher layer parameter for enablement of an asymmetrical DL sTRP/UL mTRP scenario).

### {Option 3}

The specific condition may be that the UE indicates (transmits) no specific UE capability information (UE capability information indicating supporting of two TAs for an asymmetrical DL sTRP/UL mTRP scenario).

### {Option 4}

The specific condition may be that the UE is provided with no specific higher layer parameter (higher layer parameter for pathloss offset configuration for an asymmetrical DL sTRP/UL mTRP scenario).

The present embodiment allows the UE to appropriately assume the difference between the first downlink timing associated with the first TAG and the second downlink timing associated with the second TAG, even in a case where a DL sTRP/UL mTRP scenario is possible to be applied.

### <Transmission Timing Adjustment in Rel. 18>

As described above, for Rel. 18, regarding transmission timing adjustment, a definition as below is under study:
In a case where a UE operates using two TAGs in an active UL BWP of a serving cell, the UE expects, unless the UE indicates specific UE capability information (larger-thanCP-capability), a difference between a first downlink timing associated with a first TAG and a second downlink timing associated with a second TAG is not larger than a CP length for the active UL BWP.

In other words, in a case where the UE indicates the specific UE capability information (larger-thanCP-capability), it is possible that (the UE expects that) the difference between the first downlink timing associated with the first TAG and the second downlink timing associated with the second TAG is larger than the CP length for the active UL BWP.

For another course, although the DL sTRP/UL mTRP has two downlink timings with respect to two TAGs, the UE capability information (larger-thanCP-capability) may not be supported. Therefore, it is preferable to clarify that the specific UE capability information (larger-thanCP-capability) is applied only to Rel-18 mDCI-based two TAs and not applied to the DL sTRP/UL mTRP (for example, Rel. 19).

### <Fourth Embodiment>

Next transmission timing adjustment using two TAGs, studied for Rel. 18, may be applied only to Rel-18 mDCI-based two TAs and may not be applied to two TAs of DL sTRP/UL mTRP (for example, Rel. 19):
In a case where a UE operates using two TAGs in an active UL BWP of a serving cell and the UE indicates specific UE capability information (larger-thanCP-capability), a difference between a first downlink timing associated with a first TAG and a second downlink timing associated with a second TAG may be larger than a CP length for the active UL BWP.

In a case where a DL sTRP/UL mTRP scenario is applied and the UE operates using two TAGs in an active UL BWP of a serving cell, the UE may expect that the difference between the first downlink timing associated with the first TAG and the second downlink timing associated with the second TAG is not larger than the cyclic prefix (CP) length for the active UL BWP. In other words, in a case where the DL sTRP/UL mTRP scenario is applied, the UE may make expectation as described above irrespective of presence or absence of indication of the UE capability information (larger-thanCP-capability).

### {Option 1-1}

In a case where the UE operates using two TAGs in an active UL BWP of a serving cell, the UE expects, unless a specific condition is satisfied, a difference between a first downlink timing associated with a first TAG and a second downlink timing associated with a second TAG is expected not to be larger than a CP length for the active UL BWP. The specific condition may be that, for the UE, two coresetPoolIndex values = 0 and 1 are provided for a first CORESET and a second CORESET or that coresetPoolIndex value = 1 is provided for the second CORESET with no coresetPoolIndex value provided for the first CORESET and the UE indicates the specific UE capability information (larger-thanCP-capability).

### {Option 1-2}

In a case where the UE operates using two TAGs in an active UL BWP of a serving cell and a specific condition is satisfied, a difference between a first downlink timing associated with a first TAG and a second downlink timing associated with a second TAG is expected to be larger than a CP length for the active UL BWP. The specific condition may be that, for the UE, two coresetPoolIndex values = 0 and 1 are provided for a first CORESET and a second CORESET or that coresetPoolIndex value = 1 is provided for the second CORESET with no coresetPoolIndex value provided for the first CORESET and the UE indicates the specific UE capability information (larger-thanCP-capability).

### {Option 2}

In a case where the UE operates using two TAGs in an active UL BWP of a serving cell and the UE is provided with a specific higher layer parameter (higher layer parameter for enablement of an asymmetrical DL sTRP/UL mTRP scenario), the UE may expect that the difference between the first downlink timing associated with the first TAG and the second downlink timing associated with the second TAG is not larger than the CP length for the active UL BWP.

### {Option 3}

In a case where the UE operates using two TAGs in an active UL BWP of a serving cell and the UE indicates (transmits) specific UE capability information (UE capability information indicating supporting of two TAs for an asymmetrical DL sTRP/UL mTRP scenario), the UE may expect that a difference between a first downlink timing associated with a first TAG and a second downlink timing associated with a second TAG is not larger than a CP length for the active UL BWP.

### {Option 4}

In a case where the UE operates using two TAGs in an active UL BWP of a serving cell and the UE is provided with a specific higher layer parameter (higher layer parameter for pathloss offset configuration for an asymmetrical DL sTRP/UL mTRP scenario), the UE may expect that the difference between the first downlink timing associated with the first TAG and the second downlink timing associated with the second TAG is not larger than the CP length for the active UL BWP.

The fourth embodiment may be implemented in combination with the third embodiment. For example, the specific condition in each option of the third embodiment may be added to an example of each option of the fourth embodiment.

The present embodiment allows the UE to appropriately assume the difference between the first downlink timing associated with the first TAG and the second downlink timing associated with the second TAG, even in a case where the UE capability information (larger-thanCP-capability) is not applied.

### <Supplements>

A UL TRP or DL TRP in the present proposal may be (interpreted as) (a group/set of) TCI state(s)/beam(s)/spatial relation information, (a group/set of) SSB(s)/CSI-RS(s)/SRS(s)/PL-RS(s).

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability. Note that "supporting" and "whether to support" may be interchangeably interpreted.

The specific UE capability may indicate at least one of the following:
- supporting of specific processing/operation/control/information for at least one of the above-described embodiments;
- supporting of DL sTRP/UL mTRP;
- supporting of two TAs/TAGs; and
- the number of TAs/TAGs to be supported.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment of the present disclosure, the following supplementary notes of the invention will be given.

### {Supplementary Note 1}

A terminal including:
a receiving section that receives, in a case where a specific condition is satisfied, pieces of information including information indicating two Timing Advance (TA) offset values and information related to a Transmission Configuration Indication (TCI) state associated with a Timing Advance Group (TAG)-ID for determination of timing adjustment of corresponding uplink (UL) transmission; and
a control section that controls UL transmission, based on the pieces of information received.

### {Supplementary Note 2}

The terminal according to supplementary note 1, wherein
the specific condition is that the terminal transmits capability information indicating supporting of two TAs for an asymmetrical Downlink single transmission/reception point (DL sTRP) or Uplink multi transmission/reception point (UL mTRP) scenario.

### {Supplementary Note 3}

The terminal according to supplementary note 1 or 2, wherein
the specific condition is that the receiving section receives a higher layer parameter indicating a pathloss offset configuration for an asymmetrical Downlink single transmission/reception point (DL sTRP) or Uplink multi transmission/reception point (UL mTRP) scenario.

### {Supplementary Note 4}

The terminal according to any one of supplementary notes 1 to 3, wherein
the specific condition is that at least one TCI codepoint indicated indicates two TCI states.

### (Supplementary Notes)

Regarding one embodiment of the present disclosure, the following supplementary notes of the invention will be further given.

### {Supplementary Note 1}

A terminal including:
a receiving section that receives information indicating two Timing Advance Groups (TAGs); and
a control section that controls a transmission timing of an uplink (UL) signal, based on a reception timing of a downlink (DL) reference signal and on the information.

### {Supplementary Note 2}

The terminal according to supplementary note 1, wherein
the control section controls the transmission timing of the UL signal, based on a reception timing of a DL reference signal associated with a UL or joint Transmission Configuration Indication (TCI) state and on the information.

### {Supplementary Note 3}

The terminal according to supplementary note 1 or 2, wherein
the control section controls the transmission timing of the UL signal, based on a reception timing of a DL reference signal provided by a specific higher layer parameter and on the information.

### {Supplementary Note 4}

The terminal according to any one of supplementary notes 1 to 3, wherein
the control section controls, in a case where two UL or joint TCI states are indicated and where one UL or joint TCI state out of the two UL or joint TCI states indicated is associated with a DL reference signal, the transmission timing of the UL signal, based on a reception timing of the DL reference signal associated with the one UL or joint TCI state and on the information.

### (Supplementary Notes)

Regarding one embodiment of the present disclosure, the following supplementary notes of the invention will be further given.

### {Supplementary Note 1}

A terminal including:
a receiving section that receives information indicating two Timing Advance Groups (TAGs); and
a control section that expects, in a case where a specific condition is satisfied, a difference between a first downlink timing associated with a first TAG and a second downlink timing associated with a second TAG is not larger than a Cyclic Prefix (CP) length for an active Uplink Bandwidth part (UL BWP).

### {Supplementary Note 2}

The terminal according to supplementary note 1, wherein
the specific condition is that the terminal is provided with two control resource set (CORESET) pool index values for a first CORESET and a second CORESET or provided with a specific value, as a CORESET pool index value, for the second CORESET with no CORESET pool index value provided for the first CORESET.

### {Supplementary Note 3}

The terminal according to supplementary note 1 or 2, wherein
the specific condition is that the terminal is provided with no higher layer parameter for enablement of an asymmetrical Downlink single transmission/reception point (DL sTRP) or Uplink multi transmission/reception point (UL mTRP) scenario.

### {Supplementary Note 4}

The terminal according to any one of supplementary notes 1 to 3, wherein
the specific condition is that the terminal indicates no capability information indicating supporting of two TAs for an asymmetrical Downlink single transmission/reception point (DL sTRP) or Uplink multi transmission/reception point (UL mTRP) scenario.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

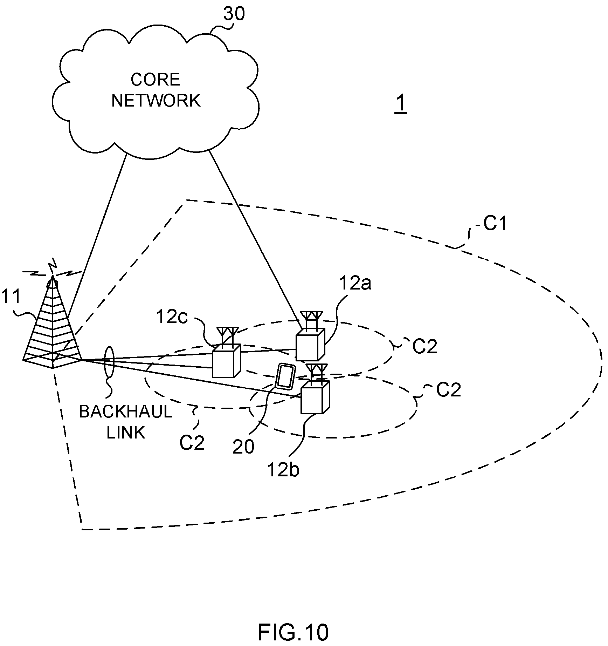

FIG. 10 is a diagram to show an example of a schematic structure of the radio communication system according to one embodiment. A radio communication system 1 (which may be simply referred to as a system 1) may be a system implementing communication using Long Term Evolution (LTE), 5th generation mobile communication system New Radio (5G NR) and so on the specifications of which have been drafted by the Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or lower (sub-6 GHz), and FR2 may be a frequency band higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

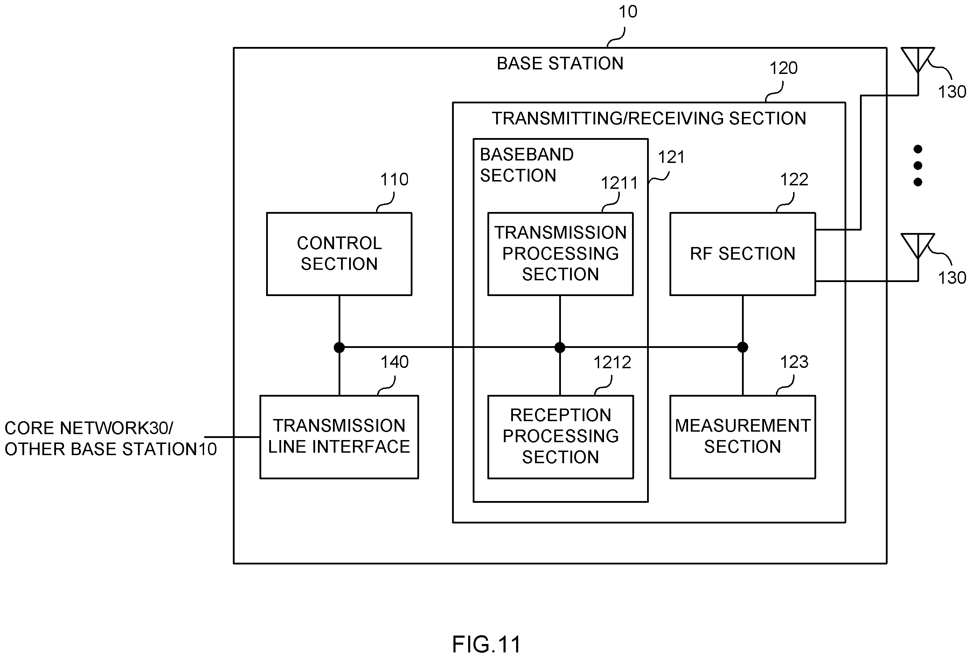

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit, in a case where a specific condition is satisfied, pieces of information including information indicating two Timing Advance (TA) offset values and information related to a Transmission Configuration Indication (TCI) state associated with a Timing Advance Group (TAG)-ID for determination of timing adjustment of corresponding UL transmission.

The control section 110 may control reception of an uplink (UL) signal transmitted based on the pieces of information transmitted.

The transmitting/receiving section 120 may transmit information indicating two Timing Advance Groups (TAGs).

The control section 110 may control, at a transmission timing of an uplink (UL) signal controlled based on a reception timing of a downlink (DL) reference signal and on the information, reception of the UL signal.

The transmitting/receiving section 120 may transmit information indicating two Timing Advance Groups (TAGs).

The control section 110 may expect, in a case where a specific condition is satisfied, a difference between a first downlink timing associated with a first TAG and a second downlink timing associated with a second TAG is not larger than a Cyclic Prefix (CP) length for an active Uplink Bandwidth part (UL BWP).

### (User Terminal)

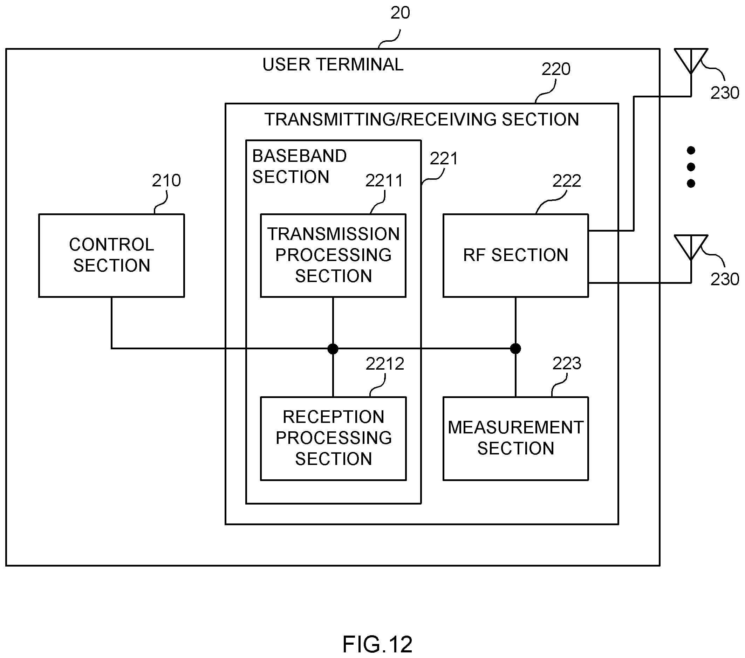

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive, in a case where a specific condition is satisfied, pieces of information including information indicating two Timing Advance (TA) offset values and information related to a Transmission Configuration Indication (TCI) state associated with a Timing Advance Group (TAG)-ID for determination of timing adjustment of corresponding UL transmission.

The control section 210 may control uplink (UL) transmission, based on the pieces of information received.

The specific condition may be that the terminal transmits capability information indicating supporting of two TAs for an asymmetrical Downlink single transmission/reception point (DL sTRP) or Uplink multi transmission/reception point (UL mTRP) scenario.

The specific condition may be that the receiving section receives a higher layer parameter indicating a pathloss offset configuration for an asymmetrical Downlink single transmission/reception point (DL sTRP) or Uplink multi transmission/reception point (UL mTRP) scenario.

The specific condition the specific condition may be that at least one TCI codepoint indicated indicates two TCI states.

The transmitting/receiving section 220 may receive information indicating two Timing Advance Groups (TAGs).

The control section 210 may control a transmission timing of an uplink (UL) signal, based on a reception timing of a downlink (DL) reference signal and on the information.

The control section 210 may control the transmission timing of the UL signal, based on a reception timing of a DL reference signal associated with a UL or joint Transmission Configuration Indication (TCI) state and on the information.

The control section 210 may control the transmission timing of the UL signal, based on a reception timing of a DL reference signal provided by a specific higher layer parameter and on the information.

The control section 210 may control, in a case where two UL or joint TCI states are indicated and where one UL or joint TCI state out of the two UL or joint TCI states indicated is associated with a DL reference signal, the transmission timing of the UL signal, based on a reception timing of the DL reference signal associated with the one UL or joint TCI state and on the information.

The transmitting/receiving section 220 may receive information indicating two Timing Advance Groups (TAGs).

The control section 210 may expect, in a case where a specific condition is satisfied, a difference between a first downlink timing associated with a first TAG and a second downlink timing associated with a second TAG is not larger than a Cyclic Prefix (CP) length for an active Uplink Bandwidth part (UL BWP).

The specific condition may be that the terminal is provided with two control resource set (CORESET) pool index values for a first CORESET and a second CORESET or provided with a specific value, as a CORESET pool index value, for the second CORESET with no CORESET pool index value provided for the first CORESET.

The specific condition may be that the terminal is provided with no higher layer parameter for enablement of an asymmetrical Downlink single transmission/reception point (DL sTRP) or Uplink multi transmission/reception point (UL mTRP) scenario.

The specific condition may be that the terminal indicates no capability information indicating supporting of two TAs for an asymmetrical Downlink single transmission/reception point (DL sTRP) or Uplink multi transmission/reception point (UL mTRP) scenario.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

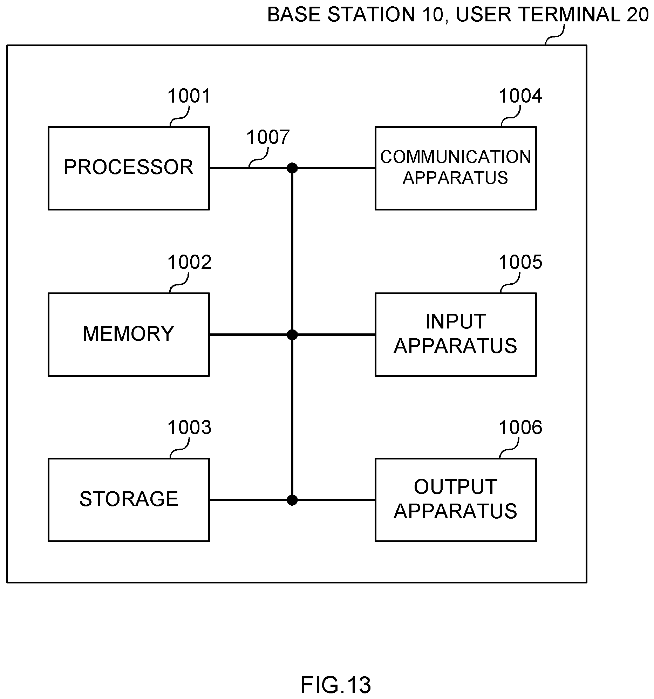

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

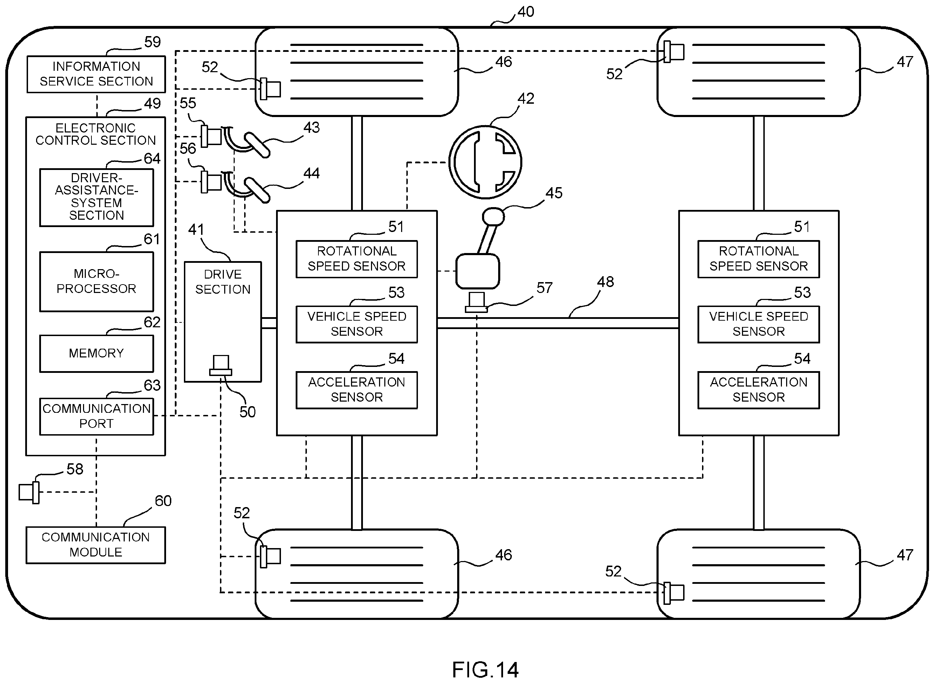

FIG. 14 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives information indicating two Timing Advance Groups (TAGs); and
a control section that controls a transmission timing of an uplink (UL) signal, based on a reception timing of a downlink (DL) reference signal and on the information.

2. The terminal according to claim 1, wherein
the control section controls the transmission timing of the UL signal, based on a reception timing of a DL reference signal associated with a UL or joint Transmission Configuration Indication (TCI) state and on the information.

3. The terminal according to claim 1, wherein
the control section controls the transmission timing of the UL signal, based on a reception timing of a DL reference signal provided by a specific higher layer parameter and on the information.

4. The terminal according to claim 1, wherein
the control section controls, in a case where two UL or joint TCI states are indicated and where one UL or joint TCI state out of the two UL or joint TCI states indicated is associated with a DL reference signal, the transmission timing of the UL signal, based on a reception timing of the DL reference signal associated with the one UL or joint TCI state and on the information.

5. A radio communication method for a terminal, the radio communication method comprising:
receiving information indicating two Timing Advance Groups (TAGs); and
controlling a transmission timing of an uplink (UL) signal, based on a reception timing of a downlink (DL) reference signal and on the information.

6. A base station comprising:
a transmitting section that transmits information indicating two Timing Advance Groups (TAGs); and
a control section that controls, at a transmission timing of an uplink (UL) signal controlled based on a reception timing of a downlink (DL) reference signal and on the information, reception of the UL signal.
